# EUROPÄISCHE PATENTSCHRIFT

(11) **EP 3 131 730 B1**
(45) Veröffentlichungstag und Bekanntmachung des Hinweises auf die Patenterteilung: **11.04.2018**
(21) Anmeldenummer: 15723117.6
(22) Anmeldetag: 13.04.2015
(51) Int. Cl.: B29C 45/14, B29C 31/00, B29C 65/48, B29L 31/00, B29C 65/00

(54) **VERFAHREN ZUM ÜBERFÜHREN VON BODENLABELN UND BANDEROLENLABELN IN EINE SPRITZGIESSFORM UND HIERFÜR GEEIGNETE VORRICHTUNG ZUR HERSTELLUNG VON MIT BODENLABELN UND BANDEROLENLABELN VERSEHENEN SPRITZGUSSTEILEN**
METHOD FOR TRANSFERRING BOTTOM LABELS AND WRAPAROUND LABELS INTO AN INJECTION MOULD AND DEVICE, SUITABLE FOR THIS PURPOSE, FOR PRODUCING INJECTION-MOULDED PARTS PROVIDED WITH BOTTOM LABELS AND WRAPAROUND LABELS
PROCÉDÉ DE TRANSFERT D'ÉTIQUETTES DE FOND ET D'ÉTIQUETTES DE POURTOUR DANS UN MOULE D'INJECTION ET DISPOSITIF APPROPRIÉ À CET EFFET POUR FABRIQUER DES PIÈCES MOULÉES PAR INJECTION MUNIES D'ÉTIQUETTES DE FOND ET DE POURTOUR

(30) Priorität: 17.04.2014 DE 102014005659
(43) Veröffentlichungstag der Anmeldung: 22.02.2017
(73) Patentinhaber: Sonoco Development Inc., Hartsville, SC 29550 (US)
(72) Erfinder: DÖBLER, Daniel, 72525 Münsingen-Dottingen (DE)
(74) Vertreter: Hoffmann Eitle
(86) Internationale Anmeldenummer: PCT/EP2015/000767
(87) Internationale Veröffentlichungsnummer: WO 2015/158423

(56) Entgegenhaltungen:
- EP-A1- 2 332 712
- WO-A1-2008/143868
- "IM FORMNEST FIXIERT", PLASTVERARBEITER, HUETHIG GMBH, HEIDELBERG, DE, Bd. 48, Nr. 3, 1. März 1997 (1997-03-01), Seite 43/44, XP000659994, ISSN: 0032-1338

## Beschreibung

Die Erfindung betrifft ein Verfahren zum Überführen sowohl eines Bodenlabels als auch eines Banderolenlabels in eine Spritzgießform zur Herstellung eines mit dem Bodenlabel und mit dem Banderolenlabel versehenen Spritzgussteils, insbesondere in Form eines Behälters, indem das Bodenlabel an der Stirnseite eines Einlegestempels und das Banderolenlabel an der Mantelseite des Einlegestempels angeordnet werden und der sowohl mit dem Bodenlabel als auch mit dem Banderolenlabel bestückte Einlegestempel in den Formraum eines Formwerkzeugs eingeführt wird, wonach das Bodenlabel an dem Boden des Formraums des Formwerkzeugs und das Banderolenlabel an der Mantelfläche des Formraums des Formwerkzeugs abgelegt werden, um sie mit einem Kunststoffmaterial zu hinterspritzen. Die Erfindung bezieht sich ferner auf eine insbesondere zur Durchführung eines solchen Verfahrens geeignete Vorrichtung zur Herstellung eines mit einem Bodenlabel und mit einem Banderolenlabel versehenen Spritzgussteils, insbesondere in Form eines Behälters, mit einem Formwerkzeug mit einem einen Boden und eine Mantelfläche umfassenden Formraum sowie mit einem in den Formraum des Formwerkzeugs einführbaren Einlegestempel mit einer Stirnseite, welche zum Aufbringen des Bodenlabels auf dieselbe geeignet ist, und mit einer Mantelseite, welche zum Aufbringen des Banderolenlabels auf dieselbe geeignet ist.

In vielen Fällen ist es erwünscht, mittels Spritzgießen herstellte Kunststoff-Formteile, wie beispielsweise zur Verpackung von Lebens-, Genussmitteln und dergleichen dienende Behälter, sowohl mit einem Boden- als auch mit einem Banderolenlabel zu versehen. Letzte können z.B. nach Art einer Barrierelage zur Erhöhung der Diffusionsdichtigkeit des Kunststoffbehälters oder auch lediglich als Träger für das Verpackungsgut identifizierende Aufdrucke dienen, so dass ein nachträgliches Aufbringen von Etiketten auf das fertige Formteil entbehrlich wird. Die Herstellung von mit derartigen Labeln versehenen Spritzgussteilen geschieht in der Regel dadurch, dass das Label in den Formraum eines Spritzgießwerkzeugs eingebracht wird, wonach es mit dem plastifizierten Kunststoffmaterial hinterspritzt wird. Nach Erstarren des Kunststoffmaterials kann das spritzgegossene Formteil, welchem das Label dauerhaft anhaftet, dem Formwerkzeug entnommen werden. Derartige Verfahren werden auch als "IML-Verfahren" (In-Mould-Labeling) bezeichnet.

Sofern das Formteil sowohl mit einem Boden- als auch mit einem Banderolenlabel versehen werden soll, wie es insbesondere bei Verpackungsbehältern in Form von Bechern, Schalen oder dergleichen häufig der Fall ist, gestaltet sich die exakte Anordnung der Labels in dem Formraum des Formwerkzeugs als relativ kompliziert. Zu diesem Zweck wird in der Regel zunächst das Bodenlabel an den Boden des Formraums und sodann das Banderolenlabel an die Mantelfläche des Formraums des Formwerkzeugs angelegt, was häufig mittels eines Einlegestempels geschieht, welcher eine zu dem Formraum des Formwerkzeugs komplementäre Form besitzt und aus diesem Grund eine exakte Anlage des jeweiligen Labels ermöglicht. Als nachteilig erweist es sich indes insbesondere, dass für ein derartiges Einlegen des Boden- und Banderolenlabels nacheinander in das Formwerkzeug zwei Stempelhübe erforderlich sind, welche zudem jeweils einerseits das Aufbringen des Bodenlabels, andererseits das Aufbringen des Banderolenlabels auf die Stirnseite bzw. auf die Mantelseite des Einlegestempels mittels geeigneter Übergabeeinrichtungen erfordern. Folglich sind auf diese Weise nur vergleichweise schlechte Taktzeiten erzielbar.

Entsprechendes gilt für das aus der JP 2012-091850 A bekannte Verfahren zur Herstellung eines spritzgegossenen Verpackungsbehälters, welcher mit einem Banderolenlabel sowie mit einem dieses innenseitig überlappenden und im Überlappungsbereich mit diesem verklebten Bodenlabel versehen ist. Gemäß dem Herstellungsverfahren wird zunächst das ebene Banderolenlabel, welches eine Länge größer als der Umfang der mit diesem zu beschichtenden Mantelfläche des Behälters aufweist, zu einem Zylinder umgebogen und wird das zylindrisch umgebogene Banderolenlabel an die Umfangsfläche eines offenen Formwerkzeugs angelegt, so dass es an einen bodenseitigen Vorsprung des Formwerkzeugs anstößt und seine zylindrisch umgebogenen, einander zugewandten Seiten aufgrund der gegenüber dem Behälterumfang größeren Länge des Banderolenlabels einander überlappen. Sodann wird das Bodenlabel mittels eines Stempels an den Boden des Formwerkzeugs derart angelegt, dass der Umfangsbereich des Bodenlabels den unteren, ihm zugewandten Abschnitt des Banderolenlabels innenseitig überlappt, wobei das Bodenlabel in diesem Überlappungsbereich mit dem Banderolenlabel verklebt wird. Sodann wird in das Formwerkzeug ein schmelzflüssiger Thermoplast eingespritzt, um das Boden- und das Banderolenlabel unter Bildung des fertigen Behälters zu hinterspritzen.

Die US 5 053 101 A beschreibt eine gattungsgemäße Vorrichtung zur Herstellung von sowohl mit einem Bodenlabel als auch mit einem Banderolenlabel versehenen Spritzgussteilen in Form von Behältern. Die Vorrichtung umfasst einen Einlegestempel mit einer planaren Stirnseite und einer etwa zylindrischen oder leicht konischen Mantelseite, welche eine in Bezug auf den Formraum eines Spitzgießwerkzeugs komplementäre Form besitzen. Der Einlegestempel ist sowohl stirnals auch mantelseitig mit Saugeinrichtungen ausgestattet, welche dazu dienen, den Einlegestempel zugleich sowohl mit einem Boden- als auch mit einem Banderolenlabel zu bestücken, welche mittels geeigneter Übergabeeinrichtungen einem jeweiligen Magazin entnommen werden. Auf diese Weise ist es möglich, mittels eines einzigen Stempelhubs beide Label in den Formraum des Formwerkzeugs zu überführen und dort abzulegen. Ein Nachteil einer solchen Vorrichtung besteht jedoch insbesondere einerseits darin, dass eine vollflächige Bedeckung des Formteils mittels des Boden- und Banderolenlabels nicht erzielt werden kann, da es im Berührungsbereich der beiden Label spätestens beim Ablegen derselben in dem Formraum des Formwerkzeugs zur Kollision kommt, es sei denn, die Abmessungen der beiden Label sind derart gewählt, dass zwischen ihnen ein Spalt verbleibt. Letzterer ist jedoch nicht nur beim fertigen Formteil erkennbar und somit unschön, sondern kann auch dazu führen, dass während des Hinterspritzens der Label das plastifizierte Kunststoffmaterial zwischen den beiden Labels hindurch auf die (spätere) Außenseite des Formteils tritt, was wiederum in einem nicht unerheblichen Ausschuss resultiert.

Ähnliche Verfahren zur Herstellung eines sowohl mit einem Boden- als auch mit einem Banderolenlabel versehenen Verpackungsbehälters sind der JP 2014-046979 A zu entnehmen, wobei wiederum einerseits das ebene Banderolenlabel eine Länge größer als der Umfang der mit diesem zu beschichtenden Mantelfläche des Behälters aufweist, so dass seine einander zugewandten Enden, wenn es zu einem Zylinder umgebogen und an die Umfangsfläche eines offenen Formwerkzeugs angelegt worden ist, einander überlappen. Andererseits weist das Bodenlabel einen größeren Umfang als der Boden des Behälters auf, so dass letzteres das Banderolenlabel randseitig überlappt. Das Einbringen von Boden- und Banderolenlabel in das Spritzgießwerkzeug geschieht entweder - ähnlich der oben erwähnten JP 2012-091850 A - nacheinander mittels eines oder mehrerer, in das Werkzeug einfahrbarer und mit Unterdruck beaufschlagter Stempel, oder - ähnlich der oben beschriebenen US 5 053 101 A - es werden sowohl das Boden- als auch das Banderolenlabel auf einen und denselben Stempel aufgebracht und zugleich in das Formwerkzeug überführt, wobei sich wiederum das oben im Zusammenhang mit der US 5 053 101 A erwähnte Problem einer Kollision der beiden Label spätestens dann stellt, wenn sie gemeinsam in dem Formwerkzeug abgelegt werden, um sie hernach mit einem plastifizierten Kunststoff zu hinterspritzen.

Der EP 2 332 712 B1 ist ein Verfahren zum Einlegen eines Boden- und eines Banderolenlabels in den Formraum eines Spritzgießwerkzeugs sowie ein hierfür geeigneter Einlegestempel zu entnehmen, welche dem vorgenannten Problem dadurch begegnen, dass die beiden Labels einander überlappend mittels eines einzigen Stempelhubs in dem Formraum abgelegt werden. Hierbei wird insbesondere das Bodenlabel derart in dem Formraum platziert, dass es randseitig den ihm zugewandten Umfangsrand des Banderolenlabels innenseitig überlappt, so dass nicht nur eine vollflächige Abdeckung des Spritzgussteils mittels der Label möglich ist, sondern auch beim Einspritzen des plastifizierten Kunststoffmaterials in den Formraum des Formwerkzeugs zunächst das Bodenlabel hinterspritzt wird und die Kunststoffschmelze sodann über das Bodenlabel hinweg mit dem Banderolenlabel in Kontakt gelangt, um auch dieses zu hinterspritzen. Auf diese Weise kann ein Durchtritt der Kunststoffschmelze zwischen den Labels hindurch an die (spätere) Außen- bzw. Sichtseite des Formteils sicher vermieden werden. Von Nachteil ist jedoch die außerordentliche Komplexität des Einlegestempels, welcher einen Außenstempel zur Aufnahme des Banderolenlabels und einen Innenstempel zur Aufnahme des Bodenlabels aufweist, wobei der Innenstempel in Bezug auf den Außenstempel axial verlagerbar ist. Beide Stempelteile weisen eine zu dem Formraum des Formwerkzeugs komplementäre Form auf, wobei der Innenstempel wiederum eine planare Stirnseite zur Aufnahme des Bodenlabels und der Außenstempel eine etwa zylindrische oder leicht konische Mantelseite zur Aufnahme des Banderolenlabels besitzt. Überdies sind beide Stempelteile mit Saugeinrichtungen versehen sind. Das Einlegen des sowohl mit einem Boden- als auch mit einem Banderolenlabel bestückten Einlegestempels geschieht zwar mittels eines einzigen Stempelhubs, doch muss nach dem Einführen des Einlegestempels in den Formraum des Formwerkzeugs zunächst das Banderolenlabel an der Mantelfläche des Formraums abgelegt werden, wonach der mit dem Bodenlabel versehene Innenstempel aus dem Außenstempel ausgefahren werden muss, um auch das Bodenlabel an dem Boden des Formraums derart abzulegen, dass es den ihm zugewandten (unteren) Rand des Banderolenlabels innenseitig überlappt. Dies kann gleichfalls zu verlängerten Taktzeiten führen.

Der Erfindung liegt daher die Aufgabe zugrunde, ein Verfahren zum Überführen sowohl eines Bodenlabels als auch eines Banderolenlabels in eine Spritzgießform zur Herstellung eines mit dem Bodenlabel und mit dem Banderolenlabel versehenen Spritzgussteils der eingangs genannten Art sowie eine insbesondere zur Durchführung eines solchen Verfahrens geeignete Vorrichtung zur Herstellung eines mit einem Bodenlabel und mit einem Banderolenlabel versehenen Spritzgussteils der eingangs genannten Art auf einfache und kostengünstige Weise dahingehend weiterzubilden, dass unter Gewährleistung von möglichst schnellen Taktzeiten den oben genannten Nachteilen zumindest teilweise begegnet werden kann.

In verfahrenstechnischer Hinsicht wird diese Aufgabe mit einem Verfahren der eingangs genannten Art gelöst, welches die folgenden Schritte umfasst:
- Bereitstellen eines Einlegestempels, dessen Stirnseite einen zentralen Abschnitt und einen radial nach außen an den zentralen Abschnitt anschließenden Umfangsabschnitt aufweist, wobei der zentrale Abschnitt in Axialrichtung des Einlegestempels weiter in Richtung dessen freien Endes vorsteht als der Umfangsabschnitt, so dass sich der Querschnitt des Einlegestempels zumindest an dem Umfangsabschnitt seiner Stirnseite in Richtung seines freien Endes verjüngt;
- Aufbringen des Bodenlabels sowohl auf den zentralen Abschnitt als auch auf den Umfangsabschnitt der Stirnseite des Einlegestempels und Aufbringen des Banderolenlabels auf die Mantelseite des Einlegestempels derart, dass das Banderolenlabel das der Stirnseite des Einlegestempels zugewandte Ende der Mantelseite des Einlegestempels in Richtung dessen freien Endes überragt;
- Einführen des mit dem Bodenlabel und mit dem Banderolenlabel bestückten Einlegestempels in den Formraum des Formwerkzeugs;
- Lösen des Banderolenlabels von der Mantelseite des Einlegestempels und Anlegen desselben zumindest an die Mantelfläche des Formraums des Formwerkzeugs;
- Lösen des Bodenlabels von der Stirnseite des Einlegestempels und Anlegen desselben an den Boden des Formraums des Formwerkzeugs, wobei der randseitige Bereich des Bodenlabels von dem Umfangsabschnitt der Stirnseite des Einlegestempels auf den Boden des Formraums des Formwerkzeugs umgeklappt wird, so dass er den ihm zugewandten Rand des Banderolenlabels innenseitig überlappt; und
- Ausführen des Einlegestempels aus dem Formraum des Formwerkzeugs.

Zur Lösung des der Erfindung zugrunde liegenden Problems sieht die Erfindung bei einer Vorrichtung der eingangs genannten Art darüber hinaus vor, dass die Stirnseite des Einlegestempels einen zentralen Abschnitt und einen radial nach außen an den zentralen Abschnitt anschließenden Umfangsabschnitt aufweist, wobei der zentrale Abschnitt in Axialrichtung des Einlegestempels weiter in Richtung dessen freien Endes vorsteht als der Umfangsabschnitt, so dass sich der Querschnitt des Einlegestempels zumindest an dem Umfangsabschnitt seiner Stirnseite in Richtung seines freien Endes verjüngt.

Die erfindungsgemäße Ausgestaltung macht es möglich, bei einem sehr einfach und kostengünstig, robust und wartungsunempfindlich ausgestalteten Einlegestempel sowohl das Bodenlabel als auch das Banderolenlabel mittels eines einzigen Stempelhubs zugleich unter Gewährleistung einer exakten Positionierung in das Formwerkzeug zu überführen, wo die Label anschließend unter Bildung des Kunststoff-Formteils hinterspritzt werden können. Aufgrund der umfangsseitigen Zurücknehmung der das Bodenlabel aufnehmenden Stirnseite des Einlegestempels gegenüber dem zentralen Abschnitt der Stirnseite des Einlegestempels wird zumindest der Umfangsrand des Bodenlabels nach oben umgeformt, wenn es auf die Stirnseite des Einlegestempels aufgebracht wird. Auf diese Weise wird jegliche Kollision mit dem Banderolenlabel sicher vermieden, welches seinerseits derart auf die Mantelseite des Einlegestempels aufgebracht wird, dass es diese nach unten, also in Richtung des stirnseitigen, freien Endes des Einlegestempels, überragt. Folglich gelangt beim Einführen des sowohl mit dem Bodenlabel als auch mit dem Banderolenlabel bestückten Einlegestempels in den Formraum des Formwerkzeugs das Banderolenlabel in die gewünschte Position an der Mantelfläche des Formraums, wobei sein unterer, freier Rand entlang der Mantelfläche des Formraums des Formwerkzeugs nach unten, gegebenenfalls bis zum Umfangsrand des Bodens des Formraums gelangt (je nach dem, wie weit der untere Rand des Banderolenlabels die Mantelseite des Einlegestempels nach unten in Richtung seines freien Endes überragt) und sich dabei unterhalb des Bodenlabels befindet, dessen Umfangsrand nach oben umgebogen dem Umfangsabschnitt der Stirnseite des Einlegestempels anliegt. Werden die Label nun von dem Einlegestempel gelöst, so klappt der Umfangsrand des Bodenlabels von dem Umfangsabschnitt der Stirnseite des Einlegestempels nach unten gegen den Boden des Formraums des Formwerkzeugs und überlappt dabei automatisch den (unteren) Umfangsrand des Banderolenlabels innenseitig des Formraums, so dass eine vollflächige Abdeckung des Formteils erzielt werden kann, ohne dass es zu einer Spaltbildung zwischen den beiden Labels kommt, durch welche das plastifizierte Polymer nach dem Einspritzen in den Formraum hindurchtreten könnte. Aufgrund der innenseitigen Überlappung (d.h. der dem Bodenlabel zugewandte Rand des Banderolenlabels liegt beim fertigen Formteil oberhalb des dem Banderolenlabel zugewandten Randes des Bodenlabels auf diesem auf) wird beim üblichen Einspritzen des Kunststoffschmelze in einen zentralen Bodenbereich des Formraums des Formwerkzeugs ferner sichergestellt, dass das plastifizierte Polymer über die randseitig einander anliegenden Label hinweg fließen kann, ohne zwischen den Labeln hindurchzutreten.

In vorteilhafter Ausgestaltung des erfindungsgemäßen Verfahrens kann vorgesehen sein, dass das Banderolenlabel derart auf die Mantelseite des Einlegestempels aufgebracht wird, dass es dessen Mantelseite in Richtung des freien Endes des Einlegestempels um einen Abstand überragt, welcher zumindest dem axialen Versatz zwischen dem am weitesten in Axialrichtung in Richtung des freien Endes des Einlegestempels vorstehenden zentralen Abschnitt der Stirnseite des Einlegestempels und dem Außenumfang des Umfangsabschnittes der Stirnseite des Einlegestempels entspricht oder diesen axialen Versatz zumindest geringfügig übertrifft. Auf diese Weise wird eine hinreichend überlappende Anordnung des Bodenlabels innenseitig des Formraums des Formwerkzeugs oberhalb des Banderolenlabels sichergestellt, wobei das gewünschte Maß an Überlappung grundsätzlich auf einfache Weise durch den Überstand voreingestellt werden, um welchen das Banderolenlabel die Mantelseite des Einlegestempels in Richtung seines stirnseitigen, freien Endes überragt, wenn es auf die Mantelseite des Einlegestempels aufgebracht worden ist.

Das Bodenlabel sollte vorzugsweise im Wesentlichen auf die gesamte Stirnseite des Einlegestempels einschließlich deren Umfangsabschnittes aufgebracht werden, wobei es zumindest einen über einen umfänglichen Teil des Umfangsabschnittes des Einlegestempels aufgebracht werden muss, um nach oben verformt und beim Einlegen in den Formraum des Formwerkzeugs "heruntergeklappt" werden zu können. Indes kann selbst dann, wenn das Bodenetikett etwas kleiner als die gesamte Stirnseite des Einlegestempels ist und sich nur über einen Teil deren zurückgenommenen Umfangsabschnittes erstreckt, dies durch einen weiteren Überstand des Banderolenlabels von der Mantelseite des Einlegestempels in Richtung der Stirnseite kompensiert werden, ohne notwendigerweise einen Einlegestempel mit anderer Geometrie verwenden zu müssen. Der Überlappungsbereich der Label "wandert" in diesem Fall von einem unteren Mantelabschnitt des Formteils in Richtung seines Bodens. Folglich kann ein einziger Einlegestempel für ähnliche Zuschnitte des Boden- und Banderolenlabels verwendet werden.

Was die Ausgestaltung des Formwerkzeugs einer erfindungsgemäßen Vorrichtung betrifft, so kann der Boden des Formraums des Formwerkzeugs beispielsweise eine im Wesentlichen ebene Erstreckung aufweisen, wie dies insbesondere im Falle einer Herstellung von spritzgegossenen Behältern üblich ist, um für eine gute Standfestigkeit der Behälter zu sorgen. Stattdessen ist es aber - sofern gewünscht - selbstverständlich auch möglich, dass der Boden des Formraums des Formwerkzeugs seinerseits etwa wannenförmig ausgebildet ist und einen sich von einem zentralen Bereich umfangsseitig schräg nach oben erstreckenden Umfangsbereich aufweist, wobei lediglich dafür Sorge zu tragen ist, dass der axiale Abstand zwischen dem tiefsten Punkt des zentralen Bereichs des Bodens des Formraums und dem Außenumfang seines Umfangsbereichs kleiner ist als der axiale Versatz zwischen dem am weitesten in Axialrichtung in Richtung des freien Endes des Einlegestempels vorstehenden zentralen Abschnitt der Stirnseite des Einlegestempels und dem Außenumfang des Umfangsabschnittes der Stirnseite des Einlegestempels, damit das Bodenlabel beim Ablegen auf dem Boden des Formraums umfangsseitig von dem Umfangsabschnitt der Stirnseite des Einlegestempels nach unten auf den Boden des Formraums und das Banderolenlabel randseitig überlappend "heruntergeklappt" werden kann. Mit anderen Worten muss eine etwaige Krümmung oder Konizität des Bodens des Formraums des Formwerkzeugs geringer sein als die Krümmung oder Konizität der Stirnseite des Einlegestempels.

Darüber hinaus kann es sich als vorteilhaft erweisen, wenn der Übergang zwischen der Mantelfläche des Formraums des Formwerkzeugs und seinem Boden abgerundet ist, wobei die Rundung insbesondere einen Radius von wenigstens 1 mm, vorzugsweise von wenigstens 2 mm, aufweist. Auf diese Weise ist es in einfacher Weise möglich, das Banderolenlabel je nach dem gewünschten Überstand, mit welchem es auf die Mantelseite des Einlegestempels in Richtung dessen stirnseitigen, freien Endes überragend aufgebracht worden ist, mit seinem dem Bodenlabel zugewandten (die Mantelseite des Einlegestempels überragenden) Rand über die Mantelfläche des Formraums hinaus bis in einen Umfangabschnitt des Bodens des Formraums des Formwerkzeugs hineinzuschieben, wobei es entlang dem abgerundeten Übergang zwischen der Mantelfläche und dem Boden des Formraums sauber umgeformt bzw. -gebogen werden kann, ohne gegen den Boden anzustoßen und dort zu blockieren und/oder Schaden zu nehmen.

Was die geometrische Ausgestaltung des Einlegestempels betrifft, so kann zunächst dessen Mantelseite in als solcher bekannter Weise im Wesentlichen komplementär zu der Mantelfläche des Formraums des Formwerkzeugs ausgebildet sein, um für eine einfache und exakte Positionierung des Banderolenlabels in dem Formraum beim Ablegen desselben zu sorgen. Die Mantelseite des Einlegestempels kann hierbei grundsätzlich eine praktisch beliebe Form besitzen und z.B. im Wesentlichen die Form eines Zylindermantels (nicht notwendigerweise kreiszylindrisch) aufweisen, wobei sein Querschnitt im Bereich seiner Mantelseite z.B. kreisrund, oval, mehreckig oder dergleichen ausgestaltet sein kann und sich insbesondere in Richtung seiner Stirnseite zumindest geringfügig verjüngen kann, um in üblicher Weise für eine einfache Entformung des fertigen Formteils zu sorgen.

Die Stirnseite des Einlegestempels, welche erfindungsgemäß einen zentralen Abschnitt und einen radial nach außen an den zentralen Abschnitt anschließenden Umfangsabschnitt aufweist, wobei der zentrale Abschnitt in Axialrichtung des Einlegestempels weiter in Richtung dessen freien Endes vorsteht als der Umfangsabschnitt, so dass sich der Querschnitt des Einlegestempels zumindest an dem Umfangsabschnitt seiner Stirnseite in Richtung seines freien Endes verjüngt, kann beispielsweise im Wesentlichen konvex gekrümmt sein und einen fließenden Übergang ihres zentralen Abschnittes in ihren Umfangsabschnitt aufweisen. Stattdessen kann es auch von Vorteil sein, wenn der zentrale Bereich der Stirnseite des Einlegestempels im Wesentlichen eben ausgebildet ist (insoweit z.B. etwa komplementär zu dem zugehörigen Bodenabschnitt des Formraums des Formwerkzeugs, wenn der Einlegestempel in diesen hinein verlagert worden ist) und der hieran radial nach außen anschließende Umfangsabschnitt im Wesentlichen konisch verjüngt oder konvex gekrümmt ist. Selbstverständlich sind weitere Ausgestaltungen denkbar, so lange sich der Querschnitt des Einlegestempels zumindest an dem Umfangsabschnitt seiner Stirnseite in Richtung seines freien Endes verjüngt, so dass die Stirnseite des Einlegestempels umfangsseitig in Bezug auf ihren zentralen Abschnitt zurückgenommen ist.

Wie als solches aus dem eingangs erwähnten Stand der Technik bekannt, kann in vorteilhafter Ausführung des erfindungsgemäßen Verfahrens vorgesehen sein, dass das Bodenlabel zum Aufbringen desselben auf die Stirnseite des Einlegestempels zumindest an den Umfangsabschnitt der Stirnseite des Einlegestempels, insbesondere sowohl an den Umfangsabschnitt als auch an den zentralen Abschnitt der Stirnseite des Einlegestempels, angesaugt wird. Darüber hinaus kann das Banderolenlabel vorzugsweise zum Aufbringen desselben auf die Mantelseite des Einlegestempels an die Mantelseite des Einlegestempels angesaugt werden, so dass der Einlegestempel sowohl das Bodenlabel als auch Banderolenlabel zugleich sicher und unverschieblich zu tragen vermag, um sie in dem Formraum des Formwerkzeugs abzulegen.

Darüber hinaus kann in vorteilhafter Ausgestaltung vorgesehen sein, dass zum Ablegen des Bodenlabels auf dem Boden des Formraums des Formwerkzeugs und Umklappen seines randseitigen Bereiches von dem Umfangsabschnitt der Stirnseite des Einlegestempels auf den Boden des Formraums der Ansaugdruck unterbrochen oder das Bodenlabel zumindest an dem Umfangsabschnitt der Stirnseite des Einlegestempels, insbesondere sowohl an dem Umfangsabschnitt als auch an dem zentralen Abschnitt der Stirnseite des Einlegestempels, mit einem, insbesondere geringen, Überdruck beaufschlagt wird. Dementsprechend kann vorzugsweise auch zum Ablegen des Banderolenlabels an der Mantelfläche des Formraums des Formwerkzeugs der Ansaugdruck unterbrochen oder kann auch das Banderolenlabel zusätzlich mit einem, insbesondere geringen, Überdruck beaufschlagt werden, um für ein einwandfreies Lösen der Label von dem Einlegestempel und Ablegen derselben an der vorgesehenen Position im Formraum des Formwerkzeugs zu sorgen.

Alternativ oder zusätzlich zu letztgenannter Ausgestaltung kann überdies vorzugsweise vorgesehen sein, dass zum Ablegen des Bodenlabels auf dem Boden des Formraums des Formwerkzeugs und Umklappen seines randseitigen Bereiches von dem Umfangsabschnitt der Stirnseite des Einlegestempels auf den Boden des Formraums und/oder zum Ablegen des Banderolenlabels an der Mantelfläche des Formraums des Formwerkzeugs das Bodenlabel und/oder das Banderolenlabel an die Wandung des Formraums des Formwerkzeugs angesaugt oder elektrostatisch an die Wandung des Formraums des Formwerkzeugs angezogen wird bzw. werden. Dies kann nicht nur zum Zwecke einer einwandfreien und exakten Übergabe der Labels von dem Einlegestempel an den Formraum des Formwerkzeugs günstig sein, sondern auch im Hinblick auf ein positionsgenaues und rutschfreies Halten des bzw. der Labels während des Einspritzens des plastifizierten Kunststoffes in den Formraum des Formwerkzeugs, während dessen das Ansaugen oder das elektrostatische Anziehen des/der Label(s) an die den Formraum begrenzende Wandung des Formwerkzeugs insbesondere aufrechterhalten werden kann. Im erstgenannten Fall kann das Formwerkzeug mit in dessen Formraum einmündenden Unterdrucköffnungen ausgestattet sein; im letztgenannten Fall kann das jeweilige Label z.B. vor dem Aufbringen auf den Einlegestempel oder insbesondere in dem bereits auf den Einlegestempel aufgebrachten Zustand elektrostatisch aufgeladen werden und/oder es wird in dem Formraum des Formwerkzeugs elektrostatisch aufgeladen, so dass es infolge der elektrischen Potenzialdifferenz an die den Formraum begrenzende(n) Wandung(en) des Formwerkzeugs "angeklebt" wird.

In vorrichtungstechnischer Hinsicht kann folglich in vorteilhafter Ausgestaltung vorgesehen sein, dass
- zumindest der Umfangsabschnitt der Stirnseite des Einlegestempels, insbesondere sowohl der Umfangsabschnitt als auch der zentrale Abschnitt der Stirnseite des Einlegestempels, und/oder
- die Mantelseite des Einlegestempels
mit Ansaugöffnungen versehen ist/sind, welche an einen Unterdruckerzeuger anschließbar sind. Dabei können z.B. die Ansaugöffnungen der Stirnseite des Einlegestempels bzw. die Ansaugöffnungen der Mantelseite des Einlegestempels in einen gemeinsamen oder in je einen Saugkanal des Einlegestempels münden, welcher (jeweils) an den Unterdruckerzeuger anschließbar ist.

In diesem Zusammenhang kann der mittels des Unterdruckerzeugers erzeugte Unterdruck zweckmäßigerweise zu- und abschaltbar sein, um das bzw. die Label einwandfrei von dem Einlegestempel lösen und in dem Formraum des Formwerkzeugs ablegen zu können. Überdies kann der Unterdruckerzeuger insbesondere auch zur Erzeugung eines gleichfalls zu- und abschaltbaren Überdruckes ausgebildet sein, so dass das bzw. die Label anlässlich des Ablegens in dem Formraum des Formwerkzeugs sicher von dem Einlegestempel gelöst werden können.

Während die geometrische Ausgestaltung der Ansaugöffnungen grundsätzlich beliebig sein kann, kann es sich als vorteilhaft erweisen, wenn sich zumindest einige Ansaugöffnungen im Wesentlichen schlitzförmig von dem zentralen Abschnitt der Stirnseite des Einlegestempels mit radialer Erstreckungsrichtungskomponente nach außen über zumindest einen Teil des Umfangsabschnittes der Stirnseite des Einlegestempels erstrecken, damit der Umfangsbereich des Bodenlabels sich einwandfrei nach oben an den Umfangsabschnitt der Stirnseite des Einlegestempels anlegt, wenn das Bodenlabel auf die Stirnseite des Einlegestempels aufgebracht und beide Label in den Formraum des Formwerkzeugs überführt werden.

Darüber hinaus kann es von Vorteil sein, wenn zumindest ein Bodenlabel, insbesondere sowohl ein Bodenlabel als auch ein Banderolenlabel, aus einem nachgiebig elastischen Material verwendet wird bzw. werden. Eine solche Ausgestaltung kann insbesondere für das Bodenlabel vorteilhaft sein, dessen umfangsseitiger Randbereich aufgrund seines elastischen Rückstellvermögens in eine etwa ebene Erstreckung selbsttätig nach unten in Richtung des Bodens des Formraums des Formwerkzeugs klappt, wenn es von der Stirnseite des Einlegestempels, an dessen Umfangsabschnitt es zuvor unter elastischer Verformung nach oben umgebogen worden ist, gelöst und in dem Formraum des Formwerkzeugs abgelegt wird.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische Seitenansicht einer Ausführungsform eines erfindungsgemäßen Einlegestempels;
- Fig. 2: eine schematische Draufsicht auf die in Fig. 1 untere Stirnseite des Einlegestempels gemäß Fig. 1;
- Fig. 3: eine schematische Schnittansicht des Einlegestempels gemäß Fig. 1 und 2 entlang der Schnittebene A-A der Fig. 2;
- Fig. 4: eine schematische Detailansicht des Einlegestempels gemäß Fig. 1 bis 3 im Bereich des Übergangs seiner Stirnseite und seiner Mantelseite, welche mit einem Boden- bzw. einem Banderolenlabel versehen worden sind;
- Fig. 5: eine der Fig. 4 entsprechende Detailansicht des Einlegestempels, nachdem dieser in den Formraum eines Formwerkzeugs eingeführt worden ist;
- Fig. 6: eine der Fig. 4 und 5 entsprechende Detailansicht des Einlegestempels unmittelbar nach dem einander randseitig überlappenden Ablegen des Boden- und des Banderolenlabels in dem Formraum des Formwerkzeugs; und
- Fig. 7: eine der Fig. 5 entsprechende Detailansicht des Formwerkzeugs, nachdem der Einlegestempel aus dem Formwerkzeug ausgebracht worden ist und die in dessen Formraum abgelegten Boden- und Banderolenlabel mit einem über einen Formkern injizierten, plastifizierten Kunststoffmaterial hinterspritzt werden.

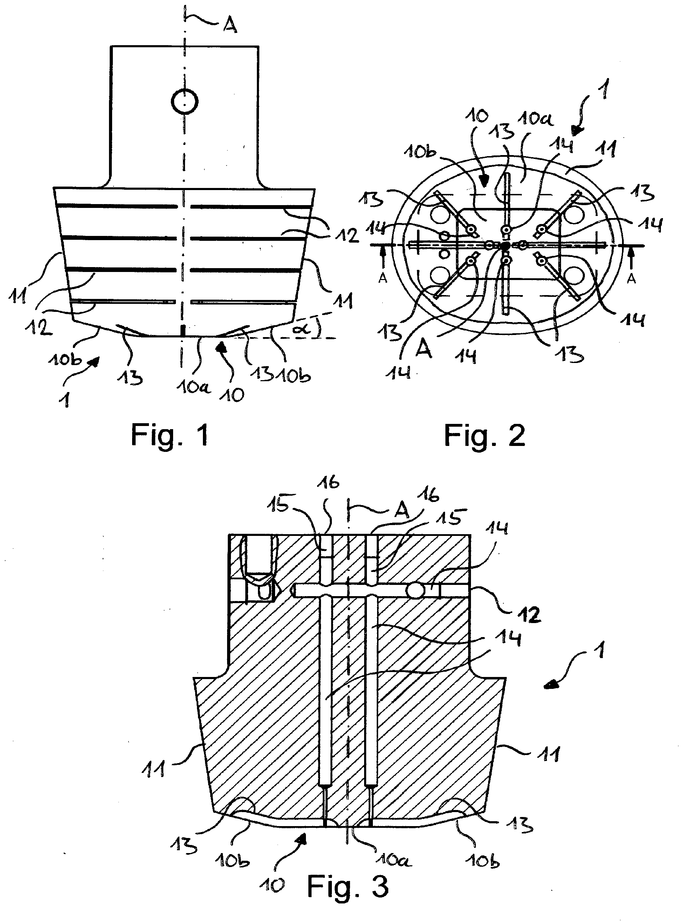

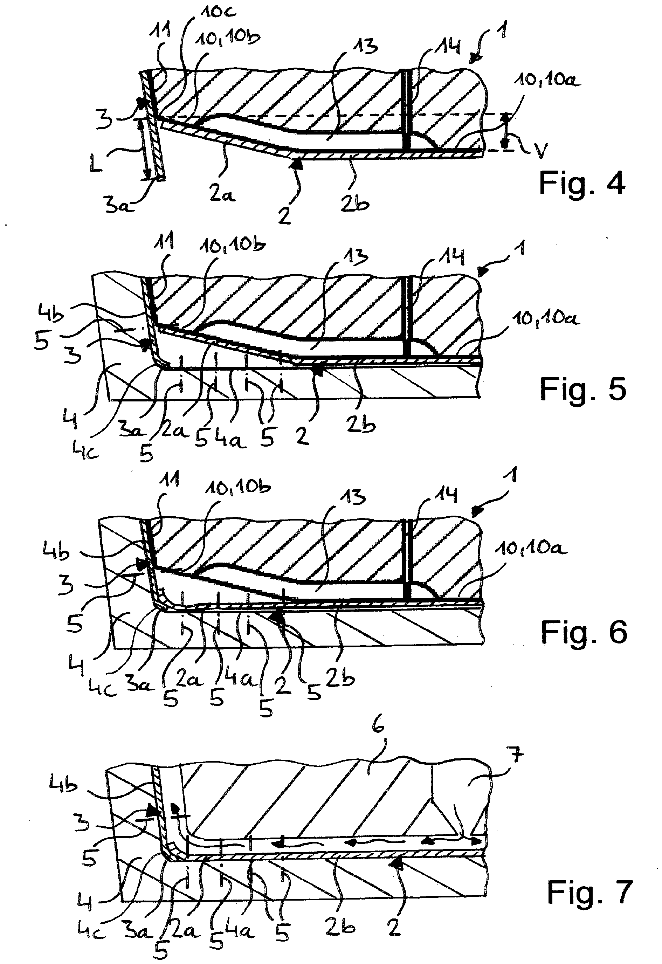

In den Fig. 1 bis 3 sind schematische Ansichten einer insgesamt mit dem Bezugszeichen 1 versehenen Ausführungsform eines Einlegestempels einer erfindungsgemäßen Vorrichtung zur Herstellung eines mit einem Bodenlabel 2 (siehe Fig. 4 bis 7) sowie mit einem Banderolenlabel 3 (siehe ebenfalls Fig. 4 bis 7) versehenen Spritzgussteils in Form eines Behälters, wie eines Bechers, wiedergegeben. Die gemäß dem "In-Mould-Labeling" arbeitende Vorrichtung umfasst ferner ein in den Fig. 1 bis 3 nicht gezeigtes Formwerkzeug 4 (siehe wiederum Fig. 4 bis 7), eine dem Formwerkzeug 4 zugeordnete Spritzgießmaschine, je ein Magazin zur Bevorratung der Boden- 2 und Banderolenlabel 3 (siehe Fig. 4 bis 7) sowie geeignete Übergabeeinrichtungen zum Übergeben der Label 2, 3 aus den jeweiligen Magazinen an den Einlegestempel 1. Die Spritzgießmaschine, Magazine und Übergabeeinrichtungen sind nicht zeichnerisch dargestellt und gemäß dem Stand der Technik ausgebildet, weshalb sie keiner näheren Erörterung bedürfen. Es versteht sich von selbst, dass die Vorrichtung beispielsweise auch mehrere Formwerkzeuge 4 und mehrere, in diese einführbare Einlegestempel 1 umfassen kann, welche z.B. synchron betätigbar sein können, um mehrere, mit einem Boden- 2 und einem Banderolenlabel 3 versehene Formteile zugleich erzeugen zu können.

Wie aus den Fig. 1 bis 3 hervorgeht, weist der Einlegestempel 1 eine zum Aufbringen des Bodenlabels 2 (Fig. 4 bis 7) vorgesehene Stirnseite 10 sowie eine zum Aufbringen des Banderolenlabels 3 (Fig. 4 bis 7) vorgesehene Mantelseite 11 auf. Die Stirnseite 10 des Einlegestempels 1 besitzt dabei einen zentralen Abschnitt 10a sowie einen radial nach außen an diesen anschließenden Umfangsabschnitt 10b, wobei der zentrale Abschnitt 10a weiter in Axialrichtung des Einlegestempels 1 in Richtung dessen freien Endes (in Fig. 1 und 3 nach unten) vorsteht als der Umfangsabschnitt 10b, welcher demgegenüber zurückgenommen ist, so dass sich der Querschnitt des Einlegestempels 1 an dem Umfangsabschnitt 10b seiner Stirnseite 10 in Richtung des freien Endes (in Fig. 1 und 3 nach unten) verjüngt. Beim vorliegenden Ausführungsbeispiel ist der zentrale Abschnitt 10a der Stirnseite 10 des Einlegestempels 1 beispielsweise im Wesentlichen eben ausgestaltet und erstreckt sich senkrecht zur Längsachse A des Einlegestempels 1, so dass er etwa komplementär zu dem - hier gleichfalls etwa ebenen - Boden 4a des Formraums des Formwerkzeugs 4 (Fig. 4 bis 7) ausgebildet ist. Der Umfangsabschnitt 10b der Stirnseite 10 des Einlegestempels 1 verjüngt sich hingegen etwa konisch, wobei er stattdessen freilich grundsätzlich auch andersartig, z.B. konvex gekrümmt, ausgebildet sein kann (nicht gezeigt). Der Winkel α zwischen der den zentralen Abschnitt 10a aufspannenden Ebene und einer die Längsachse A schneidenden, parallel zu dem Umfangsabschnitt 10b verlaufenden Gerade beträgt im vorliegenden Fall beispielsweise etwa 10° bis etwa 20°, wie z.B. etwa 15°(vgl. Fig. 1). Insgesamt erstreckt sich der Umfangsabschnitt 10b vorzugsweise über wenigstens 20%, vorzugsweise über wenigstens 30%, insbesondere über etwa 40% bis z.B. etwa 70%, der Stirnseite 10 des Einlegestempels (vgl. insbesondere Fig. 2). Die Mantelseite 11 des Einlegestempels 1 ist beim vorliegenden Ausführungsbeispiel etwa zylindrisch bis leicht konisch ausgestaltet, wobei sie insbesondere zu der ihrerseits leicht konisch verlaufenden Mantelfläche 4b des Formwerkzeugs 4 (Fig. 4 bis 7) etwa komplementär ausgestaltet sein kann.

Wie des Weiteren den Fig. 1 bis 3 zu entnehmen ist, ist die Mantelseite 11 des Einlegestempels 1 mit einer Mehrzahl an Ansaugöffnungen 12 ausgestattet, welche sich beispielsweise etwa schlitz- bzw. langlochförmig um den Umfang der Mantelseite 11 herum erstrecken (vgl. Fig. 1) und zum Ansaugen des Banderolenlabels 3 (Fig. 4 bis 7) dienen. Darüber hinaus ist die Stirnseite 10 des Einlegestempels mit einer Mehrzahl an Ansaugöffnungen 13 versehen, welche sich sowohl über den zentralen Abschnitt 10a als auch insbesondere über den Umfangsabschnitt 10b der Stirnseite 10 des Einlegestempels 1 erstrecken (vgl. insbesondere Fig. 2 und 3) und zum Ansaugen des Bodenlabels 2 (Fig. 4 bis 7) dienen. Bei dem zeichnerisch wiedergegebenen Ausführungsbeispiel erstrecken sich die Ansaugöffnungen 13 etwa in Radialrichtung der Stirnseite 10 des Einlegestempels 1 sowohl über deren zentralen Abschnitt 10a als auch über den Umfangsabschnitt 10b, um das Bodenlabel 2 möglichst mit seinem gesamten Umfangsbereich unter Umbiegen bzw. Umklappen desselben an den Umfangsabschnitt 10b der Stirnseite 10 des Einlegestempels 1 anzulegen und auf diese Weise eine Kollision mit dem auf die Mantelseite 11 des Einlegestempels 1 aufgebrachten Banderolenlabel 3 zu verhindern, wenn diese auf den Einlegestempel 1 aufgebracht werden. Wie aus Fig. 2 und 3 ersichtlich, stehen die Ansaugöffnungen 12, 13 mit im Innern des Einlegestempels 1 verlaufenden Versorgungskanälen 14 in fluidischer Verbindung, welche beispielsweise in einen oder mehrere gemeinsamen Versorgungskanäle 15 münden (Fig. 3), an dessen äußeres Ende 16 ein Unterdruckerzeuger (nicht gezeigt) angeschlossen werden kann. Der Versorgungskanal 15 oder eine diesen mit dem Unterdruckerzeuger verbindende Leitung (nicht gezeigt) ist zweckmäßigerweise mit einem Steuerventil (ebenfalls nicht gezeigt) ausgestattet, um die Ansaugöffnungen 12, 13 wahlweise mit Unterdruck zu beaufschlagen (wenn die Label 2, 3 auf den Einlegestempel 1 aufgebracht werden sollen) oder nicht (wenn die Label 2, 3 in dem Formraum des Formwerkzeugs 4 abgelegt werden sollen).

Darüber hinaus kann der Unterdruckerzeuger z.B. optional auch zur Erzeugung eines zumindest geringen Überdruckes ausgebildet sein, um das Lösen der Label 2, 3 anlässlich ihres Ablegens in dem Formraum des Formwerkzeugs 4 zu erleichtern.

Nachstehend ist eine Ausführungsform eines erfindungsgemäßen Verfahrens zum Überführen sowohl des Bodenlabels 2 als auch des Banderolenlabels 3 mittels des Einlegestempels gemäß Fig. 1 bis 3 in das nach Art einer Spritzgießform ausgebildete Formwerkzeug 4 zur Herstellung eines mit den beiden Labeln 2, 3 versehenen Spritzgussteils, im vorliegenden Fall in Form eines z.B. becherförmigen Behälters, unter Bezugnahme auf die Fig. 4 bis 7 näher erläutert. Die Komponenten des Einlegestempels 1 sind in den Fig. 4 bis 7 mit denselben Bezugszeichen versehen und nachfolgend nicht nochmals beschrieben. Es sei darauf hingewiesen, dass die Fig. 4 bis 7 nicht maßstabsgetreu sind und insbesondere die Dicke des Boden- 2 und Banderolenlabels 3 zum Zwecke einer besseren Veranschaulichung größer dargestellt ist als dies in der Realität üblicherweise der Fall ist.

Die Fig. 4 zeigt die Situation, nachdem auf den Einlegestempel 1 sowohl das Bodenlabel 2 als auch das Banderolenlabel 3 aufgebracht worden ist, indem diese z.B. mittels geeigneter Handhabungseinrichtungen (nicht gezeigt) einem jeweiligen Magazin (ebenfalls nicht gezeigt) entnommen und mittels der Ansaugöffnungen 12, 13 auf die Oberflächen der Stirn- 10 und Mantelseite 11 des Einlegestempels 1 angesaugt worden sind. Wie aus Fig. 4 ersichtlich, wird das Bodenlabel 2 hierbei im Wesentlichen auf die gesamte Stirnseite 10 des Einlegestempels 1, also sowohl auf deren zentralen Abschnitt 10a als auch auf den demgegenüber zurückgenommenen Umfangsabschnitt 10b aufgebracht, wobei der randseitige Bereich 2a des Bodenlabels 2 in Fig. 4 nach oben umgebogen wird, so dass es dem Umfangsabschnitt 10b des Einlegestempels 1 im Wesentlichen anliegt. Letzteres gilt freilich auch für den zentralen Bereich 2b des Bodenlabels 2, welches dem zentralen Abschnitt 10a der Stirnseite 10 des Einlegstempels 1 anliegt. Das Banderolenlabel 3 wird auf die Mantelseite 11 des Einlegestempels 1 aufgebracht, und zwar derart, dass sein in Fig. 4 unteres, freies Ende 3a, welches in Richtung der Stirnseite 10 des Einlegestempels 1 bzw. in Richtung dessen freien (unteren) Endes weist, die Mantelseite 11 des Einlegestempels 1 (in Fig. 4 nach unten) überragt. Eine Kollision des Bodenlabels 2 mit dem Banderolenlabel 3 wird folglich zuverlässig vermieden. Der Abstand L, um welchen das Banderolenlabel 3 von der Mantelseite 11 des Einlegestempels 1 (nach unten) vorsteht bzw. die Mantelseite 11 überragt, entspricht zumindest oder beträgt vorzugsweise etwas mehr als der axiale Versatz V zwischen dem am weitesten in Axialrichtung (also in Fig. 1 in der Senkrechten) in Richtung des freien Endes des Einlegestempels 1 vorstehenden zentralen Abschnitt 10a der Stirnseite 10 des Einlegestempels 1 und dem Außenumfang 10c des Umfangsabschnittes 10b der Stirnseite 10 des Einlegestempels 1, an welchem an den Umfangsabschnitt 10b der Stirnseite 10 des Einlegestempels 1 dessen Mantelseite 11 anschließt.

Die Fig. 5 zeigt die Situation, in welcher der mit dem Bodenlabel 2 und mit dem Banderolenlabel 3 bestückte Einlegestempel gemäß Fig. 4 in den Formraum des Formwerkzeugs 4 eingeführt worden ist und seine Endposition erreicht hat, in welcher die Label 2, 3 in dem Formraum abgelegt werden sollen, aber durch Aufrechterhalten des über die Ansaugöffnungen 12, 13 wirkenden Unterdruckes (gerade) noch auf der Stirnseite 10 bzw. der Mantelseite 11 des Einlegestempels 1 gehalten sind. Wie in Fig. 5 erkennbar, liegt der zentrale Bereich 2b des Bodenlabels 2 dem Boden 4a des Formraums des Formwerkzeugs 4 im Wesentlichen an, während sein randseitiger Bereich 2a (noch) nach oben umgebogen dem zurückgenommenen Umfangsabschnitt 10b der Stirnseite 10 des Einlegestempels anliegt. Das Banderolenlabel 3 befindet sich gleichfalls im Wesentlichen in Anlage an die Mantelfläche 4a des Formraums des Formwerkzeugs 4, wobei das dem Boden 4a zugewandte, in Fig. 5 untere Ende 3a des Banderolenlabels 3 aufgrund seines Überstandes über die Mantelseite 11 des Einlegestempels 1 hinaus zumindest bis in den Übergangsbereich der Mantelfläche 4b in den Boden 4a des Formraums des Formwerkzeugs 4 oder - je nach voreingestelltem, gewünschten Überstand - z.B. auch bis zumindest in den äußeren Umfangsbereich des Bodens 4a vorsteht. Sein freies Ende 3a kann dabei gemäß dem Übergang 4c der Mantelfläche 4b in den Boden 4a des Formraums des Formwerkzeugs nach innen umgebogen worden sein, weshalb dieser Übergang 4c vorzugsweise etwa stetig verläuft und insbesondere, z.B. unter Bildung eines Radius von vorzugsweise etwa 1 mm bis etwa 5 mm, abgerundet sein kann.

Die Fig. 6 zeigt die Situation, in welcher das Bodenlabel 2 und das Banderolenlabel 3 (gerade) von Einlegestempel 1 gelöst und im Formraum des Formwerkzeugs 4 abgelegt worden sind, was nacheinander oder insbesondere gleichzeitig geschehen kann, indem die Ansaugkanäle 12, 13, z.B. durch Schließen des Steuerventils, von dem Unterdruckerzeuger getrennt und der Unter- bzw. Ansaugdruck folglich unterbrochen wird. Wie aus Fig. 6 ersichtlich, wird hierbei der randseitige Bereich 2a des Bodenlabels 2 von dem Umfangsabschnitt 10b der Stirnseite 10 des Einlegestempels 1 (vgl. Fig. 4 und 5) fort auf den Boden 4a des Formraums des Formwerkzeugs 4 (in Fig. 6 nach unten) umgeklappt, so dass er den ihm zugewandten Rand des Banderolenlabels 3 innenseitig überlappt und sich das in Fig. 6 untere Ende 3a des Banderolenlabels 3 folglich zwischen dem Formwerkzeug 4 und dem äußeren Randabschnitt des Bodenlabels 2 befindet, so dass eine Spaltbildung zwischen dem Bodenlabel 2 und dem Banderolenlabel 3 bei dem fertigen Formteil zuverlässig vermieden wird. Das "Umklappen" des randseitigen Bereiches 2a des Bodenlabels 2 von dem zurückgenommenen Umfangsabschnitt 10b der Stirnseite 10 des Einlegestempels 1 auf den Boden 4a des Formraums des Formwerkzeugs 4 unter Überlappung zumindest des Endes 3a des Banderolenlabels 2 kann dabei rein infolge des elastischen Rückstellvermögens des Materials des Bodenlabels 2 in eine etwa ebene Erstreckung geschehen, weshalb das Bodenlabel 2 - sowie gegebenenfalls auch das Banderolenlabel 3 - vorzugsweise aus einem nachgiebig elastischen Material, beispielsweise aus einer fertig bedruckten Kunststofffolie mit einem höheren Schmelzpunkt als jener des in das Formwerkzeug 4 eingespritzten, plastifizierten Kunststoffmaterials (siehe hierzu weiter unten unter Bezugnahme auf die Fig. 7), gefertigt ist.

Alternativ oder insbesondere zusätzlich kann zu diesem Zweck indes vorzugsweise vorgesehen sein, dass das Formwerkzeug 4 seinerseits eine Mehrzahl an in den Formraum mündenden Unterdrucköffnungen aufweist, welche in den Fig. 5 bis 7 lediglich schematisch mit dem Bezugszeichen 5 angedeutet sind und von welchen sich zumindest einige in dem randseitigen Umfangsbereich des Bodens 4 angeordnet sind, welcher mit dem zurückgenommenen Umfangsabschnitt 10b der Stirnseite 10 des Einlegestempels 1 kommuniziert, wenn letztere in den Formraum des Formwerkzeugs 4 eingeführt worden ist. Die Unterdrucköffnungen 5 können allerdings mit Vorteil sowohl an dem Boden 4a als auch an der Mantelfläche 4b des Formraums des Formwerkzeugs 4 angeordnet sein, um sowohl das Bodenlabel 2 als auch das Banderolenlabel 3 in der exakten Position zu halten, wenn sie in dem Formraum des Formwerkzeugs 4 abgelegt worden sind und mit dem plastifizierten Kunststoffmaterial hinterspritzt werden, wobei der Unterdruck insbesondere auch während des Hinterspritzens aufrechterhalten werden kann. Anstelle eines Ansaugens der Label 2, 3 an die Wandungen des Formraums des Formwerkzeugs 4 wäre freilich auch eine elektrostatische Anziehung der Label 2, 3 an die Wandungen denkbar (nicht gezeigt).

Die Fig. 7 zeigt schließlich eine Situation, in welcher der Einlegestempel 1 aus dem Formraum des Formwerkzeugs 1 ausgeführt worden ist, nachdem das Bodenlabel 2 und das Banderolenlabel 3 einander randseitig überlappend in dem Formraum abgelegt worden sind. Die Anordnung der Label 2, 3 entspricht jener der Fig. 6, wobei die Label 2, 3 insbesondere durch fortwährendes Anlegen eines Unterdruckes an die Unterdrucköffnungen 5 in Position gehalten werden. Wie in Fig. 7 erkennbar, ist in den Formraum des Formwerkzeugs nun ein Formkern 6 eingeführt worden, welcher den Formraum an der dem Formwerkzeug 4 entgegengesetzten (in Fig. 7 oberen) Seite begrenzt. Der Formkern weist einen (oder mehrere; nicht gezeigt) Einspritzkanal 7 auf, welcher an die Spritzgießmaschine (nicht gezeigt) angeschlossen ist und über welchen das plastifizierte Kunststoffmaterial in den Formraum injiziert wird, um das Formteil unter Hinterspritzen des Boden- 2 und das Banderolenlabels 3 zu erzeugen. Sofern, wie es beim vorliegenden Ausführungsbeispiel der Fall ist, der Einspritzkanal 7 in einen zentralen Bereich des Bodens 4a des Formraums des Formwerkzeugs 4 einmündet, so dass die Fließwege der eingespritzten Kunststoffschmelze etwa in alle Richtungen gleich lang sind, wird die Kunststoffschmelze über das Bodenlabel 2 und dessen Überlappungsbereich mit dem Banderolenlabel 3 hinweg an die Innenseite des Banderolenlabels 3 geleitet, wie dies durch die Pfeile gemäß Fig. 7 angedeutet ist. Es ist erkennbar, dass auf diese Weise ein Eindringen des plastifizierten Kunststoffmaterials zwischen den Überlappungsbereich des Bodenlabels 2 mit dem Banderolenlabel 3 und insbesondere ein Durchschlagen der Kunststoffschmelze an die Außenseite der Label 2, 3 sicher und zuverlässig verhindert wird, so dass ein allseitig mit den Labeln 2, 3 bedecktes Formteil erzeugt werden kann, bei welchem der Übergang zwischen den Labeln 2, 3 nicht erkennbar ist und zudem die Bildung von dadurch verursachtem Ausschuss vermieden wird.

## Patentansprüche

1. Verfahren zum Überführen sowohl eines Bodenlabels (2) als auch eines Banderolenlabels (3) in eine Spritzgießform (4) zur Herstellung eines mit dem Bodenlabel (2) und mit dem Banderolenlabel (3) versehenen Spritzgussteils, insbesondere in Form eines Behälters, indem das Bodenlabel (2) an der Stirnseite (10) eines Einlegestempels (1) und das Banderolenlabel (3) an der Mantelseite (11) des Einlegestempels (1) angeordnet werden und der sowohl mit dem Bodenlabel (2) als auch mit dem Banderolenlabel (3) bestückte Einlegestempel (1) in den Formraum eines Formwerkzeugs (4) eingeführt wird, wonach das Bodenlabel (2) an dem Boden (4a) des Formraums des Formwerkzeugs (4) und das Banderolenlabel (3) an der Mantelfläche (4b) des Formraums des Formwerkzeugs (4) abgelegt werden, um sie mit einem Kunststoffmaterial zu hinterspritzen, **gekennzeichnet durch** die folgenden Schritte:
- Bereitstellen eines Einlegestempels (1), dessen Stirnseite (10) einen zentralen Abschnitt (10a) und einen radial nach außen an den zentralen Abschnitt (10a) anschließenden Umfangsabschnitt (10b) aufweist, wobei der zentrale Abschnitt (10a) in Axialrichtung des Einlegestempels (1) weiter in Richtung dessen freien Endes vorsteht als der Umfangsabschnitt (10b), so dass sich der Querschnitt des Einlegestempels (1) zumindest an dem Umfangsabschnitt (10b) seiner Stirnseite (10) in Richtung seines freien Endes verjüngt;
- Aufbringen des Bodenlabels (2) sowohl auf den zentralen Abschnitt (10a) als auch auf den Umfangsabschnitt (10b) der Stirnseite (10) des Einlegestempels (1) und Aufbringen des Banderolenlabels (3) auf die Mantelseite (11) des Einlegestempels (1) derart, dass das Banderolenlabel (3) das der Stirnseite (10) des Einlegestempels (1) zugewandte Ende der Mantelseite (11) des Einlegestempels (1) in Richtung dessen freien Endes überragt;
- Einführen des mit dem Bodenlabel (2) und mit dem Banderolenlabel (3) bestückten Einlegestempels (1) in den Formraum des Formwerkzeugs (4);
- Lösen des Banderolenlabels (3) von der Mantelseite (11) des Einlegestempels (1) und Anlegen desselben zumindest an die Mantelfläche (4b) des Formraums des Formwerkzeugs (4);
- Lösen des Bodenlabels (2) von der Stirnseite (10) des Einlegestempels (1) und Anlegen desselben an den Boden (4a) des Formraums des Formwerkzeugs (4), wobei der randseitige Bereich (2a) des Bodenlabels (2) von dem Umfangsabschnitt (10b) der Stirnseite (10) des Einlegestempels (1) auf den Boden (4a) des Formraums des Formwerkzeugs (4) umgeklappt wird, so dass er den ihm zugewandten Rand (3a) des Banderolenlabels (3) innenseitig überlappt; und
- Ausführen des Einlegestempels (1) aus dem Formraum des Formwerkzeugs (4).

2. Verfahren nach Anspruch 1, **dadurch gekennzeichnet, dass** das Banderolenlabel (3) derart auf die Mantelseite (11) des Einlegestempels (1) aufgebracht wird, dass es dessen Mantelseite (11) in Richtung des freien Endes des Einlegestempels (1) um einen Abstand (L) überragt, weleher zumindest dem axialen Versatz (V) zwischen dem am weitesten in Axialrichtung in Richtung des freien Endes des Einlegestempels (1) vorstehenden zentralen Abschnitt (10a) der Stirnseite (10) des Einlegestempels (1) und dem Außenumfang (10c) des Umfangsabschnittes (10b) der Stirnseite (10) des Einlegestempels (1) entspricht oder diesen axialen Versatz (V) zumindest geringfügig übertrifft.

3. Verfahren nach Anspruch 1 oder 2, **dadurch gekennzeichnet, dass** das Bodenlabel (2) im Wesentlichen auf die gesamte Stirnseite (10) des Einlegestempels (1) einschließlich deren Umfangsabschnittes (10b) aufgebracht wird.

4. Verfahren nach einem der Ansprüche 1 bis 3, **dadurch gekennzeichnet, dass**
- das Bodenlabel (2) zum Aufbringen desselben auf die Stirnseite (10) des Einlegestempels (1) zumindest an den Umfangsabschnitt (10b) der Stirnseite (10) des Einlegestempels (1), insbesondere sowohl an den Umfangsabschnitt (10b) als auch an den zentralen Abschnitt (10a) der Stirnseite (10) des Einlegestempels (1), angesaugt wird; und/oder
- das Banderolenlabel (3) zum Aufbringen desselben auf die Mantelseite (11) des Einlegestempels (1) an die Mantelseite (11) des Einlegestempels (1) angesaugt wird.

5. Verfahren nach Anspruch 4, **dadurch gekennzeichnet, dass**
- zum Ablegen des Bodenlabels (2) auf dem Boden (4a) des Formraums des Formwerkzeugs (4) und Umklappen seines randseitigen Bereiches (2a) von dem Umfangsabschnitt (10b) der Stirnseite (10) des Einlegestempels (1) auf den Boden (4a) des Formraums der Ansaugdruck unterbrochen oder das Bodenlabel (2) zumindest an dem Umfangsabschnitt (10b) der Stirnseite (10) des Einlegestempels (1), insbesondere sowohl an dem Umfangsabschnitt (10b) als auch an dem zentralen Abschnitt (10a) der Stirnseite (10) des Einlegestempels (1), mit Überdruck beaufschlagt wird; und/oder
- zum Ablegen des Banderolenlabels (3) an der Mantelfläche (4b) des Formraums des Formwerkzeugs (4) der Ansaugdruck unterbrochen oder das Banderolenlabel (3) mit Überdruck beaufschlagt wird.

6. Verfahren nach einem der Ansprüche 1 bis 5, **dadurch gekennzeichnet, dass** zum Ablegen des Bodenlabels (2) auf dem Boden (4a) des Formraums des Formwerkzeugs (4) und Umklappen seines randseitigen Bereiches (2a) von dem Umfangsabschnitt (10b) der Stirnseite (10) des Einlegestempels (1) auf den Boden (4a) des Formraums und/oder zum Ablegen des Banderolenlabels (3) an der Mantelfläche (4b) des Formraums des Formwerkzeugs (4) das Bodenlabel (2) und/oder das Banderolenlabel (3) an die Wandung des Formraums des Formwerkzeugs (4) angesaugt oder elektrostatisch an die Wandung des Formraums des Formwerkzeugs angezogen wird/werden.

7. Verfahren nach einem der Ansprüche 1 bis 6, **dadurch gekennzeichnet, dass** zumindest ein Bodenlabel (2), insbesondere sowohl ein Bodenlabel (2) als auch ein Banderolenlabel (3), aus einem nachgiebig elastischen Material verwendet wird/werden.

8. Vorrichtung zur Herstellung eines mit einem Bodenlabel (2) und mit einem Banderolenlabel (3) versehenen Spritzgussteils, insbesondere in Form eines Behälters, mit einem Formwerkzeug (4) mit einem einen Boden (4a) und eine Mantelfläche (4b) umfassenden Formraum sowie mit einem in den Formraum des Formwerkzeugs (4) einführbaren Einlegestempel (1) mit einer Stirnseite (10), welche zum Aufbringen des Bodenlabels (2) auf dieselbe geeignet ist, und mit einer Mantelseite (11), welche zum Aufbringen des Banderolenlabels (3) auf dieselbe geeignet ist, insbesondere zur Durchführung eines Verfahrens nach einem der Ansprüche 1 bis 7, **dadurch gekennzeichnet, dass** die Stirnseite (10) des Einlegestempels (1) einen zentralen Abschnitt (10a) und einen radial nach außen an den zentralen Abschnitt (10a) anschließenden Umfangsabschnitt (10b) aufweist, wobei der zentrale Abschnitt (10a) in Axialrichtung des Einlegestempels (1) weiter in Richtung dessen freien Endes vorsteht als der Umfangsabschnitt (10b), so dass sich der Querschnitt des Einlegestempels (1) zumindest an dem Umfangsabschnitt (10b) seiner Stirnseite (10) in Richtung seines freien Endes verjüngt.

9. Vorrichtung nach Anspruch 8, **dadurch gekennzeichnet, dass** der Boden (4a) des Formraums des Formwerkzeugs (4) eine im Wesentlichen ebene Erstreckung aufweist oder seinerseits etwa wannenförmig ausgebildet ist und einen sich von einem zentralen Bereich umfangsseitig schräg nach oben erstreckenden Umfangsbereich aufweist, aber der axiale Abstand zwischen dem tiefsten Punkt des zentralen Bereichs des Bodens (4a) des Formraums (4) und dem Außenumfang seines Umfangsbereichs kleiner ist als der axiale Versatz (V) zwischen dem am weitesten in Axialrichtung in Richtung des freien Endes des Einlegestempels (1) vorstehenden zentralen Abschnitt (10a) der Stirnseite (10) des Einlegestempels (1) und dem Außenumfang (10c) des Umfangsabschnittes (10b) der Stirnseite (10) des Einlegestempels (1).

10. Vorrichtung nach Anspruch 8 oder 9, **dadurch gekennzeichnet, dass** der Übergang (4c) zwischen der Mantelfläche (4b) des Formraums des Formwerkzeugs (4) und seinem Boden (4a) abgerundet ist, wobei die Rundung insbesondere einen Radius von wenigstens 1 mm, vorzugsweise von wenigstens 2 mm, aufweist.

11. Vorrichtung nach einem der Ansprüche 8 bis 10, **dadurch gekennzeichnet, dass** der Einlegestempel (1) eine im Wesentlichen konvex gekrümmte Stirnseite (10) mit einem fließenden Übergang ihres zentralen Abschnittes (10a) in ihren Umfangsabschnitt (10b) aufweist.

12. Vorrichtung nach einem der Ansprüche 8 bis 10, **dadurch gekennzeichnet, dass** der zentrale Bereich (10a) der Stirnseite (10) des Einlegestempels (1) im Wesentlichen eben ausgebildet ist und der hieran radial nach außen anschließende Umfangsabschnitt (10b) im Wesentlichen konisch verjüngt oder konvex gekrümmt ist.

13. Vorrichtung nach einem der Ansprüche 8 bis 12, **dadurch gekennzeichnet, dass**
- zumindest der Umfangsabschnitt (10b) der Stirnseite (10) des Einlegestempels (1), insbesondere sowohl der Umfangsabschnitt (10b) als auch der zentrale Abschnitt (10a) der Stirnseite (10) des Einlegestempels (1), und/oder
- die Mantelseite (11) des Einlegestempels (1) mit Ansaugöffnungen (13, 12) versehen ist/sind, welche an einen Unterdruckerzeuger anschließbar sind.

14. Vorrichtung nach Anspruch 13, **dadurch gekennzeichnet, dass** der mittels des Unterdruckerzeugers erzeugte Unterdruck zu- und abschaltbar ist, wobei der Unterdruckerzeuger insbesondere auch zur Erzeugung eines gleichfalls zu- und abschaltbaren Überdruckes ausgebildet ist.

15. Vorrichtung nach Anspruch 13 oder 14, **dadurch gekennzeichnet, dass** sich zumindest einige Ansaugöffnungen (13) im Wesentlichen schlitzförmig von dem zentralen Abschnitt (10a) der Stirnseite (10) des Einlegestempels (1) mit radialer Erstreckungsrichtungskomponente nach außen über zumindest einen Teil des Umfangsabschnittes (10b) der Stirnseite (10) des Einlegestempels (1) erstrecken.

## Claims

1. A method for transferring a bottom label (2) and a wraparound label (3) into an injection mould (4) for producing an injection-moulded part provided with the bottom label (2) and with the wraparound label (3), in particular in the form of a container, in that the bottom label (2) is arranged on the end side (10) of an insert die (1) and the wraparound label (3) on the lateral side (11) of the insert die (1), and the insert die (1) equipped with both the bottom label (2) and with the wraparound label (3) is introduced into the mould cavity of a moulding tool (4), after which the bottom label (2) is deposited on the bottom (4a) of the mould cavity of the moulding tool (4) and the wraparound label (3) is deposited on the lateral surface (4b) of the mould cavity of the moulding tool (4) in order to back-mould them with a plastics material, **characterized by** the following steps:
- providing an insert die (1), the end side (10) of which has a central portion (10a) and a circumferential portion (10b) adjoining the central portion (10a) radially on the outside, the central portion (10a) protruding further in the direction of the free end of the insert die (1) in the axial direction of the latter than the circumferential portion (10b), such that the cross-section of the insert die (1) narrows in the direction of its free end, at least in the circumferential portion (10b) of its end side (10);
- applying the bottom label (2) both to the central portion (10a) and to the circumferential portion (10b) of the end side (10) of the insert die (1) and applying the wraparound label (3) to the lateral side (11) of the insert die (1) such that the wraparound label (3) projects beyond the end, facing the end side (10) of the insert die (1), of the lateral side (11) of the insert die (1) in the direction of the free end thereof;
- introducing the insert die (1) equipped with the bottom label (2) and with the wraparound label (3) into the mould cavity of the moulding tool (4);
- detaching the wraparound label (3) from the lateral side (11) of the insert die (1) and applying the same at least to the lateral surface (4b) of the mould cavity of the moulding tool (4);
- detaching the bottom label (2) from the end side (10) of the insert die (1) and applying the same to the bottom (4a) of the mould cavity of the moulding tool (4), the peripheral region (2a) of the bottom label (2) being turned down from the circumferential portion (10b) of the end side (10) of the insert die (1) onto the bottom (4a) of the mould cavity of the moulding tool (4), such that it internally overlaps the edge (3a), facing it, of the wraparound label (3); and
- extracting the insert die (1) from the mould cavity of the moulding tool (4).

2. The method according to Claim 1, **characterized in that** the wraparound label (3) is applied to the lateral side (11) of the insert die (1) such that it projects over its lateral side (11) in the direction of the free end of the insert die (1) by a distance (L) that corresponds at least to the axial offset (V) between the central portion (10a) of the end side (10) of the insert die (1) protruding the furthest in the axial direction in the direction of the free end of the insert die (1) and the outer circumference (10c) of the circumferential portion (10b) of the end side (10) of the insert die (1) or at least slightly exceeds this axial offset (V).

3. The method according to Claim 1 or 2, **characterized in that** the bottom label (2) is applied substantially to the entire end side (10) of the insert die (1), including its circumferential portion (10b).

4. The method according to any of Claims 1 to 3, **characterized in that**
- in order to apply the bottom label (2) to the end side (10) of the insert die (1)
said bottom label (2) is sucked at least onto the circumferential portion (10b) of the end side (10) of the insert die (1), in particular both onto the circumferential portion (10b) and onto the central portion (10a) of the end side (10) of the insert die (1); and/or
- in order to apply the wraparound label (3) to the lateral side (11) of the insert die (1), said wraparound label (3) is sucked onto the lateral side (11) of the insert die (1).

5. The method according to Claim 4, **characterized in that**
- in order to deposit the bottom label (2) on the bottom (4a) of the mould cavity of the moulding tool (4) and to turn down its peripheral region (2a) from the circumferential portion (10b) of the end side (10) of the insert die (1) onto the bottom (4a) of the mould cavity, the suction pressure is interrupted or the bottom label (2) is exposed to positive pressure at least on the circumferential portion (10b) of the end side (10) of the insert die (1), in particular both on the circumferential portion (10b) and on the central portion (10a) of the end side (10) of the insert die (1); and/or
- in order to deposit the wraparound label (3) on the lateral surface (4b) of the mould cavity of the moulding tool (4) the suction pressure is interrupted or the wraparound label (3) is additionally exposed to positive pressure.

6. The method according to any of Claims 1 to 5, **characterized in that** in order to deposit the bottom label (2) on the bottom (4a) of the mould cavity of the moulding tool (4) and to turn down its peripheral region (2a) from the circumferential portion (10b) of the end side (10) of the insert die (1) onto the bottom (4a) of the mould cavity, and/or in order to deposit the wraparound label (3) on the lateral surface (4b) of the mould cavity of the moulding tool (4), the bottom label (2) and/or the wraparound label (3) is or are sucked onto the wall of the mould cavity of the moulding tool (4) or is or are drawn electrostatically onto the wall of the mould cavity of the moulding tool.

7. The method according to any of Claims 1 to 6, **characterized in that** at least one bottom label (2), in particular both a bottom label (2) and a wraparound label (3), is/are made of a flexibly elastic material.

8. A device for producing an injection-moulded part provided with a bottom label (2) and with a wraparound label (3), in particular in the form of a container, with a moulding tool (4) with a mould cavity comprising a bottom (4a) and a lateral surface (4b) as well as with an insert die (1) that can be introduced into the mould cavity of the moulding tool (4), which insert die has an end side (10) which is suitable for applying the bottom label (2) to the latter, and with a lateral side (11) which is suitable for applying the wraparound label (3) to the latter, in particular for implementing a method according to any of Claims 1 to 7, **characterized in that** the end side (10) of the insert die (1) has a central portion (10a) and a circumferential portion (10b) adjoining the central portion (10a) radially on the outside, the central portion (10a) protruding further in the direction of the free end of the insert die (1) in the axial direction of the latter than the circumferential portion (10b) so that the cross-section of the insert die (1) narrows in the direction of its free end, at least in the circumferential portion (10b) of its end side (10).

9. The device according to Claim 8, **characterized in that** the bottom (4a) of the mould cavity of the moulding tool (4) has a substantially planar extension or is on its part made approximately in the form of a trough and has a circumferential region extending from a central region on the circumferential side obliquely upwards, but the axial distance between the lowest point of the central region of the bottom (4a) of the mould cavity (4) and the outer circumference of its circumferential region is smaller than the axial offset (V) between the central portion (10a) of the end side (10) of the insert die (1) protruding the furthest in the axial direction in the direction of the free end of the insert die (1) and the outer circumference (10c) of the circumferential portion (10b) of the end side (10) of the insert die (1).

10. The device according to Claim 8 or 9, **characterized in that** the cross-over (4c) between the lateral surface (4b) of the mould cavity of the moulding tool (4) and its bottom (4a) are rounded, the rounding having in particular a radius of at least 1 mm, preferably of at least 2 mm.

11. The device according to any of Claims 8 to 10, **characterized in that** the insert die (1) has a substantially convexly curved end side (10) with a flowing cross-over of its central portion (10a) into its circumferential portion (10b).

12. The device according to any of Claims 8 to 10, **characterized in that** the central region (10a) of the end side (10) of the insert die (10) is substantially planar in form, and the circumferential portion (10b) adjoining the latter radially on the outside is substantially conically narrowed or convexly curved.

13. The device according to any of Claims 8 to 12, **characterized in that**
- at least the circumferential portion (10b) of the end side (10) of the insert die (1), in particular both the circumferential portion (10b) and the central portion (10a) of the end side (10) of the insert die (1), and/or
- the lateral side (11) of the insert die (1)
is/are provided with suction openings (13, 12) which can be connected to a negative pressure generator.

14. The device according to Claim 13, **characterized in that** the negative pressure generated by the negative pressure generator can be switched on or off, the negative pressure generator in particular also being designed to generate a positive pressure that can likewise be switched on or off.

15. The device according to Claim 13 or 14, **characterized in that** at least some suction openings (13) extend substantially in slot form over at least part of the circumferential portion (10b) of the end side (10) of the insert die (1) from the central portion (10a) of the end side (10) of the insert die (1) with the radial extension direction component on the outside.

## Revendications

1. Procédé de transfert non seulement d'une étiquette de fond (2) mais aussi d'une étiquette de paroi (3) dans un moule de moulage par injection (4) pour la fabrication d'une pièce moulée par injection pourvue de l'étiquette de fond (2) et de l'étiquette de paroi (3), en particulier sous la forme d'un récipient, dans lequel l'étiquette de fond (2) est agencée sur le côté avant (10) d'un poinçon d'insertion (1) et l'étiquette de paroi (3) est agencée sur le côté enveloppe (11) du poinçon d'insertion (1) et le poinçon d'insertion (1) équipé non seulement de l'étiquette de fond (2) mais aussi de l'étiquette de paroi (3) est introduit dans l'espace de moulage d'un outil de moulage (4), après quoi l'étiquette de fond (2) est posée sur le fond (4a) de l'espace de moulage de l'outil de moulage (4) et l'étiquette de paroi (3) sur la surface enveloppe (4b) de l'espace de moulage de l'outil de moulage (4), afin d'injecter derrière elle un matériau plastique, **caractérisé par** les étapes suivantes :
la mise à disposition d'un poinçon d'insertion (1), dont le côté avant (10) présente une section centrale (10a) et une section périphérique (10b) se raccordant radialement vers l'extérieur à la section centrale (10a), dans lequel la section centrale (10a) dépasse dans le sens axial du poinçon d'insertion (1) plus en direction de son extrémité libre que la section périphérique (10b) de sorte que la section transversale du poinçon d'insertion (1) se rétrécit au moins sur la section périphérique (10b) de son côté avant (10) en direction de son extrémité libre ;
- l'application de l'étiquette de fond (2) non seulement sur la section centrale (10a) mais aussi sur la section périphérique (10b) du côté avant (10) du poinçon d'insertion (1) et l'application de l'étiquette de paroi (3) sur le côté enveloppe (11) du poinçon d'insertion (1) de telle manière que l'étiquette de paroi (3) dépasse l'extrémité du côté enveloppe (11) du poinçon d'insertion (1) tournée vers le côté avant (10) du poinçon d'insertion (1) en direction de son extrémité libre ;
- l'introduction du poinçon d'insertion (1) équipé de l'étiquette de fond (2) et de l'étiquette de paroi (3) dans l'espace de moulage de l'outil de moulage (4) ;
- le détachement de l'étiquette de paroi (3) du côté enveloppe (11) du poinçon d'insertion (1) et la pose de celle-ci au moins sur la surface enveloppe (4b) de l'espace de moulage de l'outil de moulage (4) ;
- le détachement de l'étiquette de fond (2) du côté avant (10) du poinçon d'insertion (1) et la pose de celle-ci sur le fond (4a) de l'espace de moulage de l'outil de moulage (4), dans lequel la zone côté bord (2a) de l'étiquette de fond (2) est rabattue de la section périphérique (10b) du côté avant (10) du poinçon d'insertion (1) sur le fond (4a) de l'espace de moulage de l'outil de moulage (4) de sorte qu'elle recouvre côté intérieur le bord (3a) tourné vers lui de l'étiquette de paroi (3) ; et
- la sortie du poinçon d'insertion (1) hors de l'espace de moulage de l'outil de moulage (4).

2. Procédé selon la revendication 1, **caractérisé en ce que** l'étiquette de paroi (3) est appliquée sur le côté enveloppe (11) du poinçon d'insertion (1) de telle manière qu'elle dépasse de son côté enveloppe (11) en direction de l'extrémité libre du poinçon d'insertion (1) d'une distance (L) qui correspond au moins au décalage axial (V) entre la section centrale (10a), dépassant le plus largement dans le sens axial en direction de l'extrémité libre du poinçon d'insertion (1), du côté avant (10) du poinçon d'insertion (1) et la périphérie extérieure (10c) de la section périphérique (10b) du côté avant (10) du poinçon d'insertion(1) ou dépasse ce décalage axial (V) au moins légèrement.

3. Procédé selon la revendication 1 ou 2, **caractérisé en ce que** l'étiquette de fond (2) est appliquée sensiblement sur tout le côté avant (10) du poinçon d'insertion (1) y compris sa section périphérique (10b).

4. Procédé selon l'une quelconque des revendications 1 à 3, **caractérisé en ce que**
- l'étiquette de fond (2) est aspirée, pour l'application de celle-ci sur le côté avant (10) du poinçon d'insertion (1), au moins au niveau de la section périphérique (10b) du côté avant (10) du poinçon d'insertion (1), en particulier non seulement au niveau de la section périphérique (10b) mais aussi au niveau de la section centrale (10a) du côté avant (10) du poinçon d'insertion (1) ; et/ou
- l'étiquette de paroi (3) est aspirée, pour l'application de celle-ci sur le côté enveloppe (11) du poinçon d'insertion (1), au niveau du côté enveloppe (11) du poinçon d'insertion (1).

5. Procédé selon la revendication 4, **caractérisé en ce que**
- pour la pose de l'étiquette de fond (2) sur le fond (4a) de l'espace de moulage de l'outil de moulage (4) et le rabattement de sa zone (2a) côté bord de la section périphérique (10b) du côté avant (10) du poinçon d'insertion (1) sur le fond (4a) de l'espace de moulage, la pression d'aspiration est interrompue ou l'étiquette de fond (2) est soumise à une surpression au moins sur la section périphérique (10b) du côté avant (10) du poinçon d'insertion (1), en particulier non seulement sur la section périphérique (10b) mais aussi sur la section centrale (10a) du côté avant (10) du poinçon d'insertion (1) ; et/ou
- pour la pose de l'étiquette de paroi (3) sur la surface enveloppe (4b) de l'espace de moulage de l'outil de moulage (4), la pression d'aspiration est interrompue ou l'étiquette de paroi (3) est soumise à une surpression.

6. Procédé selon l'une quelconque des revendications 1 à 5, **caractérisé en ce que** pour la pose de l'étiquette de fond (2) sur le fond (4a) de l'espace de moulage de l'outil de moulage (4) et le rabattement de sa zone côté bord (2a) de la section périphérique (10b) du côté avant (10) du poinçon d'insertion (1) sur le fond (4a) de l'espace de moulage et/ou pour la pose de l'étiquette de paroi (3) sur la surface enveloppe (4b) de l'espace de moulage de l'outil de moulage (4), l'étiquette de fond (2) et/ou l'étiquette de paroi (3) est/sont aspirées sur la paroi de l'espace de moulage de l'outil de moulage (4) ou est/sont attirées par voie électrostatique sur la paroi de l'espace de moulage de l'outil de moulage.

7. Procédé selon l'une quelconque des revendications 1 à 6, **caractérisé en ce qu'**on utilise au moins une étiquette de fond (2), en particulier non seulement une étiquette de fond (2) mais aussi une étiquette de paroi (3), en un matériau souple et élastique.

8. Dispositif de fabrication d'une pièce moulée par injection pourvue d'une étiquette de fond (2) et d'une étiquette de paroi (3), en particulier sous la forme d'un récipient, avec un outil de moulage (4) avec un espace de moulage comprenant un fond (4a) et une surface enveloppe (4b) ainsi qu'avec un poinçon d'insertion (1) pouvant être introduit dans l'espace de moulage de l'outil de moulage (4) avec un côté avant (10) qui est approprié à l'application de l'étiquette de fond (2) sur celui-ci, et avec un côté enveloppe (11) qui est approprié à l'application de l'étiquette de paroi (3) sur celui-ci, en particulier pour la réalisation d'un procédé selon l'une quelconque des revendications 1 à 7, **caractérisé en ce que** le côté avant (10) du poinçon d'insertion (1) présente une section centrale (10a) et une section périphérique (10b) se raccordant radialement vers l'extérieur à la section centrale (10a), dans lequel la section centrale (10a) dépasse dans le sens axial du poinçon d'insertion (1) plus en direction de son extrémité libre que la section périphérique (10b) de sorte que la section transversale du poinçon d'insertion (1) se rétrécit au moins au niveau de la section périphérique (10b) de son côté avant (10) en direction de son extrémité libre.

9. Dispositif selon la revendication 8, **caractérisé en ce que** le fond (4a) de l'espace de moulage de l'outil de moulage (4) présente une étendue sensiblement plane ou de son côté est réalisé à peu près en forme de cuve et présente une zone périphérique s'étendant à partir d'une zone centrale en biais vers le haut côté périphérie, mais la distance axiale entre le point le plus bas de la zone centrale du fond (4a) de l'espace de moulage (4) et la périphérie extérieure de sa zone périphérique est inférieure au décalage axial (V) entre la section centrale (10a), dépassant le plus largement dans le sens axial en direction de l'extrémité libre du poinçon d'insertion (1), du côté avant (10) du poinçon d'insertion (1) et la périphérie extérieure (10c) de la section périphérique (10b) du côté avant (10) du poinçon d'insertion (1).

10. Dispositif selon la revendication 8 ou 9, **caractérisé en ce que** la transition (4c) est arrondie entre la surface enveloppe (4b) de l'espace de moulage de l'outil de moulage (4) et son fond (4a), dans lequel l'arrondi présente en particulier un rayon d'au moins 1 mm, de préférence d'au moins 2 mm.

11. Dispositif selon l'une quelconque des revendications 8 à 10, **caractérisé en ce que** le poinçon d'insertion (1) présente un côté avant (10) courbé de manière sensiblement convexe avec une transition fluide de sa section centrale (10a) à sa section périphérique (10b).

12. Dispositif selon l'une quelconque des revendications 8 à 10, **caractérisé en ce que** la zone centrale (10a) du côté avant (10) du poinçon d'insertion (1) est réalisée sensiblement plane et la section périphérique (10b) se raccordant à celle-ci radialement vers l'extérieur est rétrécie sensiblement en cône ou est courbée de manière convexe.

13. Dispositif selon l'une quelconque des revendications 8 à 12, **caractérisé en ce que**
- au moins la section périphérique (10b) du côté avant (10) du poinçon d'insertion (1), en particulier non seulement la section périphérique (10b) mais aussi la section centrale (10a) du côté avant (10) du poinçon d'insertion (1), et/ou
- le côté enveloppe (11) du poinçon d'insertion (1) est/sont pourvus d'ouvertures d'aspiration (13, 12) qui sont raccordables à un générateur de dépression.

14. Dispositif selon la revendication 13, **caractérisé en ce que** la dépression générée au moyen du générateur de dépression peut être activée et désactivée, dans lequel le générateur de dépression est réalisé en particulier aussi pour la génération d'une surpression pouvant être également activée et désactivée.

15. Dispositif selon la revendication 13 ou 14, **caractérisé en ce qu'**au moins certaines ouvertures d'aspiration (13) s'étendent sensiblement en forme de fente de la section centrale (10a) du côté avant (10) du poinçon d'insertion (1) avec une composante directionnelle d'extension radiale vers l'extérieur sur au moins une partie de la section périphérique (10b) du côté avant (10) du poinçon d'insertion (1).
